# EUROPEAN PATENT APPLICATION

(11) **EP 3 485 746 A1**
(43) Date of publication of application: **22.05.2019**
(21) Application number: 17841091.6
(22) Date of filing: 17.08.2017
(51) Int. Cl.: A24F 47/00, H02M 3/10

(54) **ELECTRONIC CIGARETTE AND POWER SUPPLY CIRCUIT THEREOF**

(30) Priority: 17.08.2016 CN 201620894108 U
(71) Applicant: Joyetech Europe Holding GmbH, 6303 Zug (CH)
(72) Inventor: QIU, Weihua, Changzhou City Jiangsu 213125 (CN)
(74) Representative: Haseltine Lake LLP
(86) International application number: PCT/CN2017/097870
(87) International publication number: WO 2018/033119

(57) **Abstract**

An electronic cigarette and a power supply circuit (500) thereof. The power supply circuit (500) of an electronic cigarette comprises a power source circuit (510), and further comprises: a first booster circuit (520), which is connected to the power source circuit (510) and boosts a voltage output by the power source circuit (510) to a first voltage; a voltage stabilization circuit (530), which is connected to an output end of the first booster circuit (520), and performs voltage stabilization processing on the input first voltage so as to provide same for a micro-controller (100) of an electronic cigarette; a second booster circuit (540), which is connected to the power source circuit (510) and boosts the voltage output by the power source circuit (510) to a second voltage, the second voltage being provided for an output-stage switch circuit (200) and a display circuit (400) of the electronic cigarette, wherein the first booster circuit (520) and the second booster circuit (540) are both controlled by a control signal of the micro-controller (100) of the electronic cigarette. The electronic cigarette and the power supply circuit (500) thereof can provide a more stable working voltage for a micro-controller (100).

## Description

### TECHNICAL FIELD

The present application relates to the technical field of electronic cigarette, and more particularly to an electronic cigarette and a power supply circuit thereof.

### BACKGROUND

The functional modules of an electronic cigarette generally include a microcontroller, an output stage switch circuit, an atomizing circuit, etc. The electronic cigarette uses the microcontroller to control the working process of the various circuits.

The prior art adopts a booster circuit to be connected with a microcontroller, a liquid crystal display panel and an output stage switch circuit. In this case, power supply interference may occur between the respective power consumption units, for example, when the output stage switch circuit is interfered by a load, short-circuited or interrupted, the power supply for the microcontroller will be affected.

### SUMMARY

In view of above, it is necessary to provide a power supply circuit, to make the operating voltage of the microcontroller more stable.

Further, an electronic cigarette using the power supply circuit is also provided.

A first aspect of the present invention provides a power supply circuit for an electronic cigarette, including a power circuit. The power supply circuit further includes:
a first booster circuit connected to the power circuit to boost up the voltage outputted by the power circuit to a first voltage;
a voltage stabilization circuit connected to an output end of the first booster circuit, configured for performing voltage stabilization processing on the first voltage to be supplied to a microcontroller to the electronic cigarette;
a second booster circuit connected to the power circuit to boost up the voltage outputted by the power circuit to a second voltage, the second voltage being supplied to an output stage switch circuit and a display circuit of the electronic cigarette;
wherein the first booster circuit and the second booster circuit are each controlled by a control signal of the microcontroller of the electronic cigarette.

In one embodiment, the power circuit includes a power source and a protection circuit connected sequentially.

In one embodiment, the first booster circuit includes a first booster unit and a first switch unit, the voltage outputted by the power circuit is inputted from an input end of the first booster unit, the boosted first voltage is outputted to an input end of the first switch unit, the first booster unit and the first switch unit are controlled by the control signal of the microcontroller;
the second booster circuit includes a second booster unit and a second switch unit, the voltage outputted by the power circuit is inputted from an input end of the second booster unit, the boosted second voltage is outputted to an input end of the second switch unit, the second booster unit and the second switch unit are controlled by the control signal of the microcontroller.

In one embodiment, the first booster unit and the second booster unit each include a boost converter chip and related peripheral components.

In one embodiment, the boost converter chip adopts an integrated circuit chip TPS61040, and for the integrated circuit chip TPS61040:
an inductor L1 is connected between pin 1 and pin 5, pin 1 is also connected to the anode of a diode D1;
pin 2 is connected to the common terminal of voltage dividing resistors R1, R2 connected in series; the voltage dividing resistors R1, R2 are connected in series between the cathode of the diode D1 and ground; a capacitor C1 is further connected between the cathode of the diode D1 and pin 2;
pin 3 is grounded, a capacitor C2 is further connected between the cathode of the diode D1 and pin 3;
pin 4 is grounded through a resistor R3, and pin 4 is connected to the control signal;
pin 5 is connected to the power circuit, and pin 5 is further grounded through a capacitor set.

In one embodiment, the first switch unit adopts an integrated circuit chip UMC3N, and for the integrated circuit chip UMC3N adopted by the first switch unit:
pin 1 is grounded;
pin 2 is connected to the control signal;
pin 3 is connected to an output end of the booster unit;
pin 4 is connected to the voltage stabilization circuit as the output end of the first booster circuit.

In one embodiment, the voltage stabilization circuit includes an integrated circuit chip XC6202P332MB.

A second aspect of the present invention provides an electronic cigarette including a microcontroller, an output stage switch circuit, an atomizing circuit and a display circuit, wherein the microcontroller controls the output stage switch circuit to control the atomizing circuit, the electronic cigarette further includes the power supply circuit for the electronic cigarette according to the above first aspect, wherein:
the voltage stabilization circuit is connected to the microcontroller, for supplying power to the microcontroller;
the second booster circuit is connected respectively to the output stage switch circuit and the display circuit, for supplying power to the output stage switch circuit and the display circuit.

In one embodiment, a reverse protection diode is further connected between an output end of the power circuit and the microcontroller.

In one embodiment, further including a temperature sensing circuit connected to the microcontroller, wherein the temperature sensing circuit is configured for detecting an operating temperature of the atomizing circuit, when the operating temperature of the atomizing circuit exceeds a preset threshold, the microcontroller turns off the atomizing circuit.

A third aspect of the present invention provides a power supply method for an electronic cigarette according to the second aspect of the present invention, the method including:
boosting up the voltage outputted by the power circuit to a first voltage by the first booster circuit; performing voltage stabilization processing to the first voltage by the voltage stabilization circuit, and after the voltage stabilization processing, supplying the first voltage to the microcontroller of the electronic cigarette;
boosting up the voltage outputted by the power circuit to a second voltage by the second booster circuit, and supplying the second voltage to the output stage switch circuit and the display circuit of the electronic cigarette.

A fourth aspect of the present invention provides a power supply circuit for an electronic cigarette, including a power circuit. The power supply circuit further includes:
a first booster circuit connected to the power circuit, configured for boosting up the voltage outputted by the power circuit to a first voltage and supplying the first voltage to a microcontroller of the electronic cigarette;
a second booster circuit connected to the power circuit, configured for boosting up the voltage outputted by the power circuit to a second voltage and supplying the second voltage to an output stage switch circuit of the electronic cigarette.

Further, the second booster circuit is configured for supplying the second voltage to a display circuit of the electronic cigarette.

In one embodiment, further including a voltage stabilization circuit connected to an output end of the first booster circuit, configured for performing voltage stabilization processing on the first voltage, and after the voltage stabilization processing, for supplying the first voltage to the microcontroller of the electronic cigarette.

In one embodiment, the power circuit includes a power source and a protection circuit connected sequentially.

In one embodiment, the first booster circuit includes a first booster unit and a first switch unit, the voltage outputted by the power circuit is inputted from an input end of the first booster unit, and the boosted first voltage is outputted to an input end of the first switch unit.

In one embodiment, the second booster circuit includes a second booster unit and a second switch unit, the voltage outputted by the power circuit is inputted from an input end of the second booster unit, and the boosted second voltage is outputted to an input end of the second switch unit.

A fifth aspect of the present invention provides an electronic cigarette including a microcontroller, an output stage switch circuit and an atomizing circuit, wherein the microcontroller controls the output stage switch circuit to control the atomizing circuit, the electronic cigarette further includes the power supply circuit for the electronic cigarette according to the fourth aspect of the present invention.

Further, the electronic cigarette further includes a temperature sensing circuit connected to the microcontroller, wherein the temperature sensing circuit is configured for detecting an operating temperature of the atomizing circuit, when the operating temperature of the atomizing circuit exceeds a preset threshold, the microcontroller turns off the atomizing circuit.

A sixth aspect of the present invention provides a power supply method for an electronic cigarette according to the fifth aspect of the present invention, the method includes:
boosting up the voltage outputted by the power circuit to a first voltage by the first booster circuit, and supplying the first voltage to the microcontroller of the electronic cigarette;
boosting up the voltage outputted by the power circuit to a second voltage by the second booster circuit, and supplying the second voltage to the output stage switch circuit of the electronic cigarette.

In the electronic cigarette and the power supply circuit thereof, the first booster circuit and the second booster circuit are adopted to supply power to the microcontroller, the output stage switch circuit and the display circuit respectively, so that when the user inhales, the instantaneous voltage rise of the atomizing circuit will not cause the voltage drop of the microcontroller, making the operating voltage of the microcontroller more stable.

### BRIEF DESCRIPTION OF THE DRAWINGS

FIG. 1 is a partial block diagram of an electronic cigarette according to an embodiment;
FIG. 2 is a block diagram of another electronic cigarette corresponding to FIG. 1;
FIG. 3 is a block diagram of the first booster circuit and the second booster circuit of FIG. 2;
FIG. 4 is a circuit diagram of the first booster circuit of FIG. 2.

### DETAILED DESCRIPTION OF PREFERRED EMBODIMENTS

Further description will be made below with reference to the accompanying drawings and the embodiments.

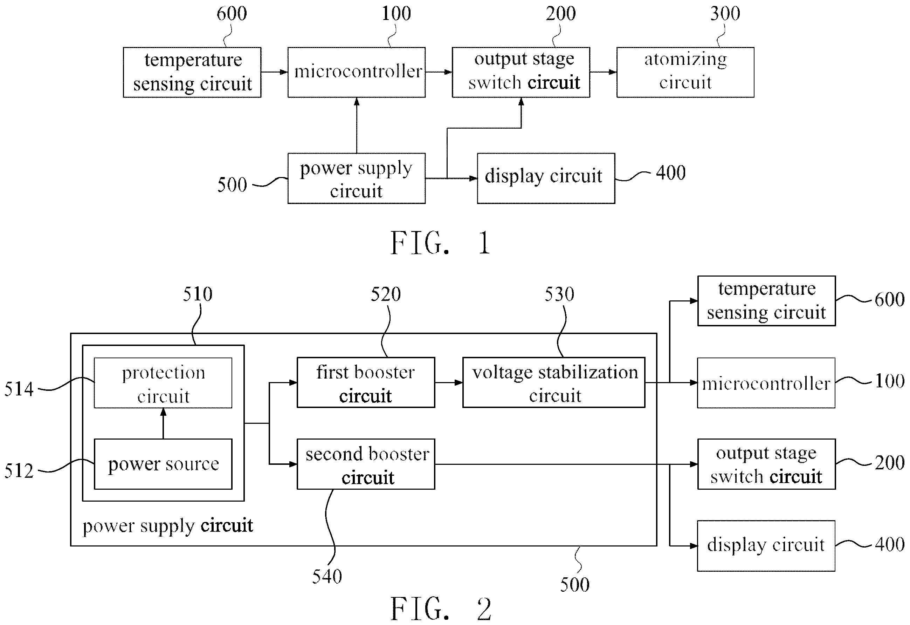

As shown in FIG. 1, it is a partial block diagram of an electronic cigarette according to an embodiment. The electronic cigarette includes a microcontroller 100, an output stage switch circuit 200, an atomizing circuit 300, a display circuit 400 and a power supply circuit 500. The microcontroller 100 controls the output stage switch circuit 200 to perform atomization control on the atomizing circuit 300 to atomize cigarette oil into smoke when the user inhales. The power supply circuit 500 is coupled to the microcontroller 100, the output stage switch circuit 200 and the display circuit 400, and supplies respective operating voltages therefor. Optionally, in an embodiment, the electronic cigarette does not include the display circuit 400.

As shown in FIG. 2, the power supply circuit 500 includes a power circuit 510, a first booster circuit 520, a voltage stabilization circuit 530 and a second booster circuit 540. The power circuit 510 includes a power source 512 and a protection circuit 514 connected sequentially. The power source 512 can be a lithium battery.

The first booster circuit 520 is connected to the power circuit 510 to boost up the voltage outputted from the power circuit 510 to a first voltage. The voltage stabilization circuit 530 is connected to the output end of the first booster circuit 520, such that the inputted first voltage is stabilized to be supplied to the microcontroller 100 of the electronic cigarette.

The second booster circuit 540 is connected to the power circuit 510 to boost up the voltage outputted from the power circuit 510 to a second voltage to be supplied to the output stage switch circuit 200 and the display circuit 400 of the electronic cigarette.

The first booster circuit 520 and the second booster circuit 540 are each controlled by a control signal of the microcontroller 100 of the electronic cigarette.

The foregoing is only an example in which the first booster circuit 520 and the microcontroller 100 are connected through the voltage stabilization circuit 530. Optionally, in actual implementation, the first booster circuit 520 may also be directly connected to the microcontroller 100, and the first voltage obtained by boosting up by the first booster circuit 520 is directly supplied to the microcontroller 100. That is, the first booster circuit 520 is connected to the power circuit 510, and boosts up the voltage outputted by the power circuit 510 to a first voltage, and the output end of the first booster circuit 520 is connected to the microcontroller 100, to supply the first voltage to the microcontroller 100 of the electronic cigarette.

Further, optionally, the second booster circuit 540 is connected to the power circuit 510, and boosts up the voltage outputted by the power circuit 510 to a second voltage. A voltage stabilization circuit is connected between the second booster circuit 540 and the output stage switch circuit 200 of the electronic cigarette, and the voltage stabilization circuit is configured to perform voltage stabilization processing on the second voltage and supply the processed second voltage to the output stage switch circuit 200.

Optionally, in an embodiment, the second booster circuit 540 is connected to the power circuit 510, and boosts up the voltage outputted by the power circuit 510 to a second voltage to be supplied to the output stage switch circuit 200 of the electronic cigarette. The second booster circuit 540 in this embodiment does not supply the second voltage to the display circuit 400. In actual implementation, this embodiment may be implemented when the electronic cigarette does not include the display circuit 400, or when the electronic cigarette includes the display circuit 400; and if the electronic cigarette includes the display circuit 400 and the second booster circuit 540 does not supply the second voltage to the display circuit 400, the power supply circuit 500 may include other circuits to boost up the voltage outputted by the power circuit, and then supply the boosted voltage to the display circuit 400, and details are not described herein.

According to the electronic cigarette and the power supply circuit described above, the power supply circuit is divided into two paths, i.e., the first booster circuit 520 for supplying power to the microcontroller 100 and the second booster circuit 540 for supplying power to the output stage switch circuit 200, to thereby avoid power supply interference between the microcontroller 100 and the output stage switch circuit 200, such that the instantaneous voltage drop caused by the output stage switch circuit 200 when controlling the atomizing circuit 300 does not affect the microcontroller 100, to ensure that the microcontroller 100 has a stable operating voltage. Similarly, the voltage of the output stage switch circuit 200 is also not affected when the microcontroller 100 operates.

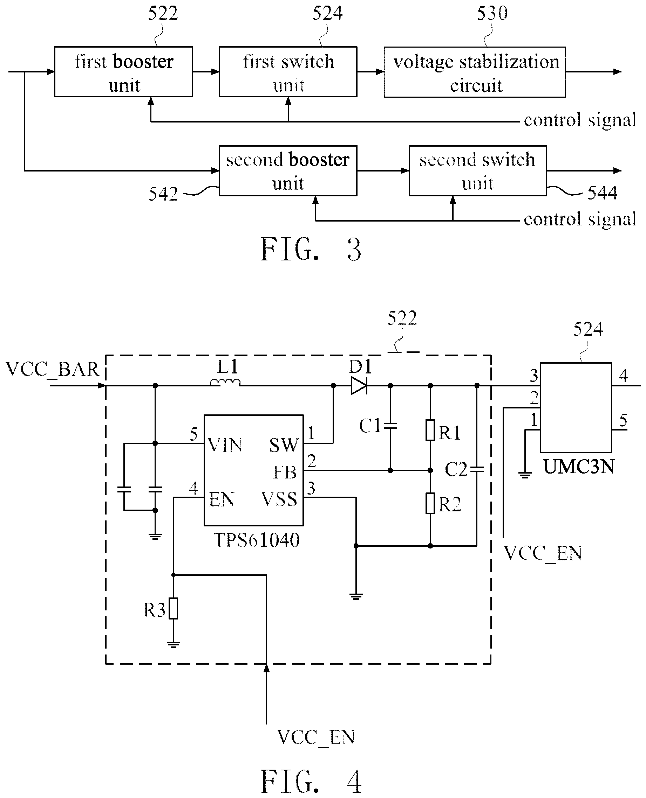

In one embodiment, as shown in FIG. 3, the first booster circuit 520 may include a first booster unit 522 and a first switch unit 524. The voltage outputted by the power circuit 510 is inputted from the input end of the first booster unit 522, and is boosted up to the first voltage, and the first voltage is outputted to the input end of the first switch unit 524. The output end of the first switch unit 524 is connected to the voltage stabilization circuit 530 as an output end of the first booster circuit 520. The first booster unit 522 and the first switch unit 524 are controlled by the same control signal outputted by the microcontroller 100, and it can be understood that the control signal is the same as the control signal that the microcontroller 100 controls the first booster circuit 520.

Optionally, the second booster circuit 540 may include a second booster unit 542 and a second switch unit 544. The voltage outputted by the power circuit 510 is inputted from the input end of the second booster unit 542, and is boosted up to the second voltage, and the second voltage is outputted to the input end of the second switch unit 544. The output end of the second switch unit 544 serves as an output end of the second booster circuit 540. The second booster unit 542 and the second switch unit 544 are controlled by the same control signal outputted by the microcontroller 100, and it can be understood that the control signal is the same as the control signal that the microcontroller 100 controls the second booster circuit 540.

It can be understood that the first booster circuit 520 and the second booster circuit 540 can also take other forms.

Specifically, the first booster unit 522 and the first booster unit 542 may include a boost converter chip and related peripheral components. It should be noted that, the peripheral components refer to the components connected to the boost converter chip for detecting or transmitting signals, such as inductor L1, resistor R1, resistor R2, resistor R3, capacitor C1, and capacitor C2, etc. which are described below. In one embodiment, the first booster unit 522 and the second booster unit 542 each adopt the following circuits, that is, the boost converter chip adopts the integrated circuit chip TPS61040. Hereinafter, the first booster circuit 520 will be described as an example.

As shown in FIG. 4, for the integrated circuit chip TPS61040:
An inductor L1 is connected between pin 1 and pin 5, pin 1 is also connected to the anode of a diode D1;
Pin 2 is connected to the common terminal of the voltage dividing resistor R1 and the voltage dividing resistor R2 connected in series; the voltage dividing resistor R1 and the voltage dividing resistor R2 are connected in series between the cathode of the diode D1 and ground; a capacitor C1 is further connected between the cathode of the diode D1 and pin 2;
Pin 3 is grounded, a capacitor C2 is further connected between the cathode of the diode D1 and pin 3;
Pin 4 is grounded through a resistor R3, and pin 4 is connected to a control signal VCC_EN;
Pin 5 is connected to the power circuit 510, and pin 5 is further grounded through a capacitor set.

It can be understood that in other embodiments, the boost converter chip may also adopt other types of integrated circuit chips with adapted peripheral circuits.

In one embodiment, the first switch unit 524 and the second switch unit 544 each adopt the integrated circuit chip UMC3N; taking the first switch unit 524 as an example, for the integrated circuit chip UMC3N adopted by the first switch unit 524:
Pin 1 is grounded;
Pin 2 is connected to the control signal VCC_EN;
Pin 3 is connected to the output end of the first booster unit 522;
Pin 4 is connected to the voltage stabilization circuit as the output end of the first booster circuit.

It can be understood that for the integrated circuit chip UMC3N adopted by the second switch 544:
Pin 1 is grounded;
Pin 2 is connected to the control signal VCC_EN;
Pin 3 is connected to the output end of the first booster unit 542;
Pin 4 is connected to the input end of the output stage switch circuit 200 as an output of the second booster circuit 540.

It can be understood that in other embodiments, the first switch unit 524 and the second switch unit 544 may also adopt other types of integrated circuit chips that can perform the same function.

In one embodiment, the voltage stabilization circuit 530 includes the integrated circuit chip XC6202P332MB.

Further, a reverse protection diode is further connected between the output end of the power circuit 510 and the microcontroller 100 to reversely protect the power supply of the microcontroller 100. Meanwhile, after the electronic cigarette is started but the cigarette oil is not atomized, only the second booster circuit 540 may be activated to supply power to the display circuit for the display of various information of the electronic cigarette, and the power circuit 510 directly supplies power to the microcontroller 100, such that the first booster circuit 520 is turned off to save energy.

Further, a temperature sensing circuit 600 connected to the microcontroller 100 is also included. As shown in FIG. 2, the temperature sensing circuit 600 may be powered by the voltage stabilization circuit 530. The temperature sensing circuit 600 is configured for detecting an operating state (i.e., operating temperature) of the atomizing circuit 300. When the operating temperature of the atomizing circuit 300 exceeds a preset threshold, the microcontroller 100 turns off the atomizing circuit 300.

It can be understood that the electronic cigarette may further include power consumption units such as airflow sensor and electric lamp. In this case, booster circuits such as a third booster circuit and a fourth booster circuit may be further provided for supplying power to the power consumption units such as the pressure sensor and the electric lamp.

The working principle of the electronic cigarette and its power supply circuit will be described below with the circuit shown in FIG. 3.

The line VCC_BAR is connected to the positive pole of a 3.7V lithium battery, and the negative pole of the lithium battery is grounded. The line VCC_EN is connected to the control pin of the microcontroller 100, and the microcontroller 100 controls the booster circuit (including the first booster circuit 520 and the second booster circuit 540) to be turned on and turned off.

When the user inhales, the microcontroller 100 sets the line VCC_EN to a high level, and the booster circuit is turned on. When the electronic cigarette enters the standby state, the microcontroller 100 sets the line VCC_EN to a low level, and the booster circuit is turned off.

After the booster circuit is turned on, the boost converter chip TPS61040 automatically generates an oscillation between pin 1 and pin 2, and the oscillation acts on the inductor L1, so that a self-induced electromotive force is generated on the inductor L1, and the electromotive force is superimposed on the original battery 3.7V to boost up the voltage.

The one-way conduction function of the diode D1 rectifies the boosted voltage, and the capacitor C1 and the capacitor C2 filter the rectified voltage to obtain a smooth high voltage. The integrated circuit chip UMC3N is controlled by the line VCC_EN, when the line VCC_EN is set to a high level (i.e., the booster circuit is turned on), pin 3 and pin 4 of the integrated circuit chip UMC3N are connected with each other, and the booster unit supplies power to other circuits; when the line VCC_EN is set to a low level (i.e., the booster circuit is turned off), pin 3 and pin 4 of the circuit chip UMC3N are disconnected from each other, and the output end has no voltage output.

The present invention also provides a power supply method for an electronic cigarette, the electronic cigarette has the same structure as the electronic cigarette (shown in FIG. 2) described above, and details are not described herein again.

In one embodiment, the power supply method includes:
boosting up the voltage outputted by the power circuit 510 to a first voltage by the first booster circuit 520, performing voltage stabilization processing to the first voltage by the voltage stabilization circuit 530, and supplying the first voltage after the voltage stabilization processing to the microcontroller 100 of the electronic cigarette;
boosting up the voltage outputted by the power circuit 510 to a second voltage by the second booster circuit, and supplying the second voltage to the output stage switch circuit 200 and the display circuit 400 of the electronic cigarette.

If the power supply circuit does not include the voltage stabilization circuit, the power supply method includes:
boosting up the voltage outputted by the power circuit 510 to a first voltage by the first booster circuit 520, and supplying the first voltage to the microcontroller 100 of the electronic cigarette;
boosting up the voltage outputted by the power circuit 510 to a second voltage by the second booster circuit 540, and supplying the second voltage to the output stage switch circuit 200 of the electronic cigarette.

The technical features of the above-described embodiments may be combined arbitrarily. For the purpose of brevity, all possible combinations of the technical features in the above embodiments are not described. However, as long as there is no contradiction between the combinations of these technical features, they should be considered as the scope of this description.

The above embodiments are merely illustrative of several embodiments of the present invention, and the description is specific and detailed, but is not to be construed as limiting the scope of the invention. It should be noted that variations and modifications may be made by those skilled in the art without departing from the spirit and scope of the invention. Therefore, the scope of the invention should be defined by the appended claims.

## Claims

1. A power supply circuit for an electronic cigarette, comprising a power circuit, the power supply circuit further comprising:
a first booster circuit connected to the power circuit to boost up the voltage outputted by the power circuit to a first voltage;
a voltage stabilization circuit connected to an output end of the first booster circuit, configured for performing voltage stabilization processing on the first voltage to be supplied to a microcontroller to the electronic cigarette;
a second booster circuit connected to the power circuit to boost up the voltage outputted by the power circuit to a second voltage, the second voltage being supplied to an output stage switch circuit and a display circuit of the electronic cigarette;
wherein the first booster circuit and the second booster circuit are each controlled by a control signal of the microcontroller of the electronic cigarette.

2. The power supply circuit for the electronic cigarette according to claim **1,** wherein the power circuit comprises a power source and a protection circuit connected sequentially.

3. The power supply circuit for the electronic cigarette according to claim **1,** wherein the first booster circuit comprises a first booster unit and a first switch unit, the voltage outputted by the power circuit is inputted from an input end of the first booster unit, the boosted first voltage is outputted to an input end of the first switch unit, the first booster unit and the first switch unit are controlled by the control signal of the microcontroller;
the second booster circuit comprises a second booster unit and a second switch unit, the voltage outputted by the power circuit is inputted from an input end of the second booster unit, the boosted second voltage is outputted to an input end of the second switch unit, the second booster unit and the second switch unit are controlled by the control signal of the microcontroller.

4. The power supply circuit for the electronic cigarette according to claim **3,** wherein the first booster unit and the second booster unit each comprise a boost converter chip and related peripheral components.

5. The power supply circuit for the electronic cigarette according to claim 4, wherein the boost converter chip adopts an integrated circuit chip TPS61040, and for the integrated circuit chip TPS61040:
an inductor L1 is connected between pin 1 and pin 5, pin 1 is also connected to the anode of a diode D1;
pin 2 is connected to the common terminal of voltage dividing resistors R1, R2 connected in series; the voltage dividing resistors R1, R2 are connected in series between the cathode of the diode D1 and ground; a capacitor C1 is further connected between the cathode of the diode D1 and pin 2;
pin 3 is grounded, a capacitor C2 is further connected between the cathode of the diode D1 and pin 3;
pin 4 is grounded through a resistor R3, and pin 4 is connected to the control signal;
pin 5 is connected to the power circuit, and pin 5 is further grounded through a capacitor set.

6. The power supply circuit for the electronic cigarette according to claim 3, wherein the first switch unit adopts an integrated circuit chip UMC3N, and for the integrated circuit chip UMC3N adopted by the first switch unit:
pin 1 is grounded;
pin 2 is connected to the control signal;
pin 3 is connected to an output end of the booster unit;
pin 4 is connected to the voltage stabilization circuit as the output end of the first booster circuit.

7. The power supply circuit for the electronic cigarette according to claim 1, wherein the voltage stabilization circuit comprises an integrated circuit chip XC6202P332MB.

8. An electronic cigarette comprising a microcontroller, an output stage switch circuit, an atomizing circuit and a display circuit, wherein the microcontroller controls the output stage switch circuit to control the atomizing circuit, the electronic cigarette further comprises the power supply circuit for the electronic cigarette according to either one of claims **1** to **7,** wherein:
the voltage stabilization circuit is connected to the microcontroller, for supplying power to the microcontroller;
the second booster circuit is connected respectively to the output stage switch circuit and the display circuit, for supplying power to the output stage switch circuit and the display circuit.

9. The electronic cigarette according to claim **8,** wherein a reverse protection diode is further connected between an output end of the power circuit and the microcontroller.

10. The electronic cigarette according to claim **8,** further comprising a temperature sensing circuit connected to the microcontroller, wherein the temperature sensing circuit is configured for detecting an operating temperature of the atomizing circuit, when the operating temperature of the atomizing circuit exceeds a preset threshold, the microcontroller turns off the atomizing circuit.

11. A power supply method for an electronic cigarette according to either one of claims **8** to **10,** the method comprising:
boosting up the voltage outputted by the power circuit to a first voltage by the first booster circuit;
performing voltage stabilization processing to the first voltage by the voltage stabilization circuit, and after the voltage stabilization processing, supplying the first voltage to the microcontroller of the electronic cigarette;
boosting up the voltage outputted by the power circuit to a second voltage by the second booster circuit, and supplying the second voltage to the output stage switch circuit and the display circuit of the electronic cigarette.

12. A power supply circuit for an electronic cigarette, comprising a power circuit, the power supply circuit further comprising:
a first booster circuit connected to the power circuit, configured for boosting up the voltage outputted by the power circuit to a first voltage and supplying the first voltage to a microcontroller of the electronic cigarette;
a second booster circuit connected to the power circuit, configured for boosting up the voltage outputted by the power circuit to a second voltage and supplying the second voltage to an output stage switch circuit of the electronic cigarette.

13. The power supply circuit for the electronic cigarette according to claim **12,** wherein the second booster circuit is further configured for supplying the second voltage to a display circuit of the electronic cigarette.

14. The power supply circuit for the electronic cigarette according to claim **12,** further comprising a voltage stabilization circuit connected to an output end of the first booster circuit, configured for performing voltage stabilization processing on the first voltage, and after the voltage stabilization processing, for supplying the first voltage to the microcontroller of the electronic cigarette.

15. The power supply circuit for the electronic cigarette according to claim **12,** wherein the power circuit comprises a power source and a protection circuit connected sequentially.

16. The power supply circuit for the electronic cigarette according to claim **12,** wherein the first booster circuit comprises a first booster unit and a first switch unit, the voltage outputted by the power circuit is inputted from an input end of the first booster unit, and the boosted first voltage is outputted to an input end of the first switch unit.

17. The power supply circuit for the electronic cigarette according to claim **12,** wherein the second booster circuit comprises a second booster unit and a second switch unit, the voltage outputted by the power circuit is inputted from an input end of the second booster unit, and the boosted second voltage is outputted to an input end of the second switch unit.

18. An electronic cigarette comprising a microcontroller, an output stage switch circuit and an atomizing circuit, wherein the microcontroller controls the output stage switch circuit to control the atomizing circuit, the electronic cigarette further comprises the power supply circuit for the electronic cigarette according to either one of claims **12** to **17.**

19. The electronic cigarette according to claim **18,** further comprising a temperature sensing circuit connected to the microcontroller, wherein the temperature sensing circuit is configured for detecting an operating temperature of the atomizing circuit, when the operating temperature of the atomizing circuit exceeds a preset threshold, the microcontroller turns off the atomizing circuit.

20. A power supply method for an electronic cigarette according to either one of claims **18** to **19,** the method comprises:
boosting up the voltage outputted by the power circuit to a first voltage by the first booster circuit, and supplying the first voltage to the microcontroller of the electronic cigarette;
boosting up the voltage outputted by the power circuit to a second voltage by the second booster circuit, and supplying the second voltage to the output stage switch circuit of the electronic cigarette.
